## Europäisches Patentamt

## European Patent Office

## Office européen des brevets

(19)

(11) Veröffentlichungsnummer: **0 263 928**
**B1**

(12) **EUROPÄISCHE PATENTSCHRIFT**

(45) Veröffentlichungstag der Patentschrift:
05.12.90

(51) Int. Cl.⁵: **E04B 1/68, F16L 59/00**

(21) Anmeldenummer: **87110731.4**

(22) Anmeldetag: **24.07.87**

(54) **Fugenisolation für Vakuum-Wärmeisolationselemente.**

(30) Priorität: **08.10.86 DE 3634347**

(43) Veröffentlichungstag der Anmeldung:
**20.04.88 Patentblatt 88/16**

(45) Bekanntmachung des Hinweises auf die Patenterteilung:
**05.12.90 Patentblatt 90/49**

(84) Benannte Vertragsstaaten:
**AT BE CH DE ES FR GB GR IT LI LU NL SE**

(56) Entgegenhaltungen:
**EP-B- 0 017 095**
**DD-A- 101 197**
**DE-A- 2 452 007**
**DE-A- 3 244 743**
**DE-C- 941 866**
**FR-A- 1 231 321**
**FR-A- 2 268 911**
**FR-A- 2 533 606**
**GB-A- 1 421 481**
**US-A- 2 853 871**
**US-A- 3 667 174**

(73) Patentinhaber: **Messerschmitt-Bölkow-Blohm Gesellschaft mit beschränkter Haftung, Robert-Koch-Strasse, D-8012 Ottobrunn(DE)**

(72) Erfinder: **Schilf, Lothar, Millionenstrasse 27, D-2816 Kirchlinteln(DE)**

ACTORUM AG

**Beschreibung**

Die Erfindung betrifft eine Fugenisolation für Vakuum-Wärmeisolationselemente, gemäß dem Oberbegriff des Patentanspruches 1.

Durch die Anwendung der Vakuum-Isolationstechnik lassen sich Wärmedämmeigenschaften erzielen, welche denen herkömmlicher Isolierungen, wie z.B. von Mineralwolle, Schaumstoffen etc., weit überlegen sind. Beim Isolieren größerer Gegenstände, wie beispielsweise von Behältern oder Rohrleitungen, ist es aus fertigungstechnischen und wirtschaftlichen Gründen erforderlich, die Isolation aus mehreren, meist plattenförmigen Einzelelementen zusammenzusetzen. Da derartige Wärmeisolationselemente in der Regel eine metallische Vakuumhülle besitzen, wirken sich die stirnseitigen Randbereiche als unerwünschte Wärmebrücken aus. Um die durch diese Wärmebrücken erzeugten Verluste zu minimieren, reduziert man die Wanddicke der Hülle in diesem Bereich und verlängert die Verbindung zwischen Bodenblech und Deckblech, indem man die stirnseitige Membran als umlaufenden Faltenbalg ausführt. Aufgrund dieser Stirnflächenstruktur entstehen zwischen benachbarten Wärmeisolationselementen zwangsläufig Hohlräume. Zur Berücksichtigung von Formtoleranzen sowie im Hinblick auf ungehinderte Wärmedehnung müssen auch zwischen den Deckblechkanten benachbarter Isolationselemente gewisse Mindestabstände eingehalten werden. Die auf diese Weise entstehenden Fugen würden im nichtisolierten Zustand die Wärmedämmeigenschaften der Anordnung unzulässig verschlechtern. Entsprechend dem Stand der Technik behilft man sich in der Regel damit, die Fugen mit Konventionellem Isoliermaterial, z.B. Mineralwolle, zu füllen und auf der Seite des zu speichernden oder zu transportierenden Mediums dicht und elastisch zu verschließen. Dennoch besitzen die Fugen deutlich schlechtere Dämmeigenschaften als die Isolationselemente.

Eine solche Fugenausführung ist beispielsweise in der EP-B 0 017 095 für den Verbindungsstoß zweier innenisolierter Rohre beschrieben.

Aus der DE-C 941 866 ist eine Fugenabdichtung für Wandelemente von Trocknern bekannt, welche relativ große Wärmedehnungen kompensieren kann und die Fugen gegen Flüssigkeiten und Dampf abdichtet. Diese besteht aus dünnen Metallfolien mit Dehnungsfalten, welche auf die zu verbindenden Wände aufgeklebt oder aufgelötet werden. Diese Fugenabdichtung hat jedoch die Nachteile, daß sie thermisch nicht oder kaum isoliert und daß sie nur minimale Druckunterschiede zwischen Fuge und abgedichteten Raum erträgt. Außerdem läßt die Fugengeometrie erwarten, daß es insbesondere an den Kreuzungsstellen (Knicke, scharfkantige Übergänge) zu Dauerfestigkeitsproblemen (Brüche infolge von periodisch wechselnden Wanddehnungen) kommt.

Der Erfindung liegt die Aufgabe zugrunde, eine Fugenisolation für Vakuum-Wärmeisolationselemente zu schaffen, welche vergleichbare Wärmedämmeigenschaften aufweist, wie eine fugenlose Vakuum-Wärmeisolation, und welche relativ große, temperaturbedingte Maßänderungen der Isolationselemente zuläßt.

Diese Aufgabe wird durch die im Hauptanspruch gekennzeichneten Merkmale gelöst.

Die Fugen sind mit mechanisch und thermisch hochbelastbaren Dehnungsblechen vakuumdicht verschlossen und ebenfalls evakuiert. Um die hohe Querkraft auf die Dehnungsbleche aufgrund der Druckdifferenz zu kompensieren, ist der Fugenhohlraum entweder vollständig mit schüttfähigem oder faserigem, druckfestem Isoliermaterial gefüllt, oder es sind in das schüttfähige bzw. faserige Isoliermaterial zusätzlich massive, wärmeisolierende Stützkörper eingelagert.

Die Unteransprüche 2 bis 4 enthalten bevorzugte Ausgestaltungen der Fugenisolation nach Anspruch 1.

Die Erfindung wird nachfolgend anhand der Zeichnung noch näher erläutert. Dabei zeigen in vereinfachter Darstellung:

Fig. 1 eine perspektivische Ansicht einer Fugenkreuzung zwischen vier Vakuum-Wärmeisolationselementen mit geschnittenen Stirnflächen,

Fig. 2 einen Schnitt entsprechend der Linie II–II in Fig. 1 durch das die Fugenkreuzung abdeckende Dehnungsblech-Element.

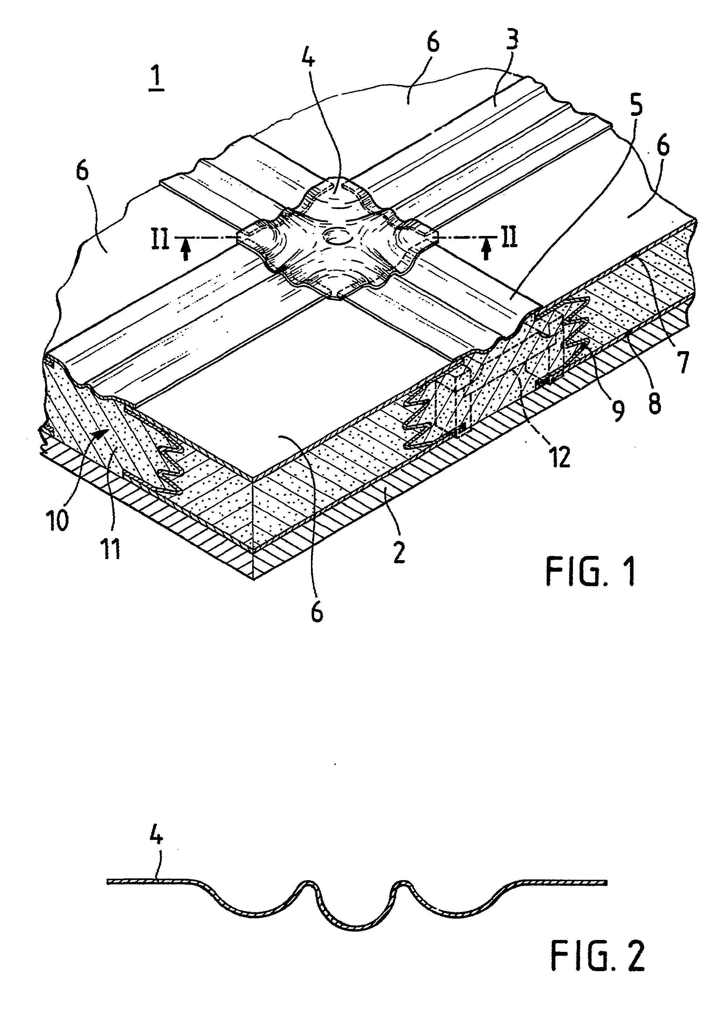

Die vier Vakuum-Wärmeisolationselemente 6 in Fig. 1 liegen mit ihren unteren Deckblechen 8 flächig auf einer gasdichten, druckfesten Wand 2 auf. Die Wand 2 kann beispielsweise die Außenwand eines Behälters sein, welcher auf seiner Innenseite isoliert ist. Der Einfachheit halber ist die Anordnung 1 in Fig. 1 eben gezeichnet, sie kann aber ebenso zylindrisch, kugelförmig oder in anderer Weise räumlich gewölbt sein. Wie in den Schnittflächen gut zu erkennen, besteht die metallische Hülle der Vakuum-Wärmeisolationselemente 6 aus einem oberen Deckblech 7 sowie einem unteren Deckblech 8, welche an den Stirnflächen mit einem umlaufenden Faltenbalg 9 verschlossen sind. Der Innenraum der Vakuum-Wärmeisolationselemente 6 ist mit einem schüttfähigen, porösen und druckfesten Isoliermaterial 11, z.B. mit Kieselgur, gefüllt und evakuiert. Im Hinblick auf Fertigungsungenauigkeiten und temperaturbedingte Maßänderungen sind die Elemente 6 in einem gewissen, stirnseitigen Abstand zueinander angeordnet, wodurch sich im rechten Winkel kreuzende Fugen entstehen.

Die Fugen sind auf ihrer Oberseite, also beispielsweise zum Behälterinneren hin, mit Dehnungsblechen vakuumdicht verschlossen. Aus Fertigungsgründen kommen dabei zwei Typen von Dehnungsblechen zur Anwendung, nämlich zweidimensional gekrümmte Elemente 3 für die gerade Fuge und an jeder Fugenkreuzung ein dreidimensional gekrümmtes Element 4. Die Elemente 3 und 4 sind miteinander und mit den Deckblechen 7 verschweißt. Infolge der eingeformten Dehnungsfalte 5 sind die Elemente 3 quer zur Fugenrichtung begrenzt elastisch verformbar, um Änderungen der Fugenbreite zu kompensieren. Auf dem Element 4 gehen die Dehnungsfalten 5 sternförmig ineinander über, wobei durch eine zentrale Mulde sowie durch entsprechend große Radien sichergestellt ist, daß keine steifen Stellen und Kerben entstehen, welche Ausgangspunkte für Brüche sein könnten. Es sei darauf hingewiesen, daß im Falle eines T-förmigen Fugenstoßes das Element 4 durch Kürzen und Abschließen einer Stirnseite mit einem winkelförmigen Blechstück ebenfalls verwendbar ist. Ebenso kann das Element 4 derart abgewandelt werden, daß drei, fünf oder mehr Fugen sternförmig zusammenlaufen.

Die Fugenhohlräume 10 sind wie die Vakuum-Wärmeisolationselemente 6 mit schüttfähigem Isoliermaterial 11 gefüllt, wobei im Falle eines besonders hohen Behälterinnendruckes mechanisch hochbelastbare Stützkörper 12 stellenweise oder durchgehend in den Fugen angeordnet sein können. Derartige brückenförmige Stützkörper 12 sind gestrichelt in der rechten vorderen Schnittfläche angedeutet und sollen verhindern, daß die Dehnungsbleche in die Fugen gedrückt und dabei überlastet werden. Die Evakuierung der Fugenhohlräume 10 erfolgt am besten mittels verschließbarer Öffnungen in der Wand 2, sprich in der Behälterwand. Mit Hilfe dieser nicht dargestellten Öffnungen kann später in der Betriebsphase die Dichtigkeit der ganzen Anordnung überprüft werden.

Fig. 2 zeigt einen Diagonalschnitt durch das Dehnungsblech-Element 4.

Die geraden Abschnitte am linken und rechten Ende dienen der Auflage auf den angrenzenden Elementen 3 bzw. auf den Vakuum-Wärmeisolationselementen 6. Die Mulde in der Mitte vermeidet ungünstige Steifigkeitssprünge, die beiden Erhebungen, welche die Mulde begrenzen, bilden die Verbindung zu den Dehnungsfalten 5 der angrenzenden Elemente 3. Der Einfachheit halber sind alle angrenzenden Elemente sowie hinter der Schnittebene liegende Konturen des Elementes 4 weggelassen.

**Patentansprüche**

1. Fugenisolation für Vakuum-Wärmeisolationselemente, welche an den Stirnseiten mit Abstand aneinandergrenzen und welche einseitig flächig an einer gasdichten, druckfesten Wand anliegen, wobei die Fugen auf der der druckfesten Wand (2) gegenüberliegenden Seite mit elastisch verformbaren Dehnungsblechen abgedeckt sind, dadurch gekennzeichnet, daß die Dehnungsbleche (Elemente 3, 4) vakuumdicht auf die Vakuum-Wärmeisolationselemente (6) aufgebracht sind, daß die Fugenhohlräume (10) evakuiert und entweder nur mit schüttfähigem oder faserigem, porösem und druckfestem Isoliermaterial (11) oder teilweise mit schüttfähigem oder faserigem Isoliermaterial (11) und teilweise mit wärmeisolierenden, mechanisch belastbaren Stützkörpern (12) ausgefüllt sind.

2. Fugenisolation nach Anspruch 1, wobei die Vakuum-Wärmeisolationselemente an der Innenseite einer gasdichten Behälterwand oder Behälterauskleidung anliegen, dadurch gekennzeichnet, daß verschließbare Evakuierungsöffnungen durch die Behälterwand bzw. durch die Behälterauskleidung in die Fugenhohlräume (10) münden.

3. Fugenisolation nach Anspruch 1 oder 2, dadurch gekennzeichnet, daß die Dehnungsbleche (Elemente 3, 4) aus einem vergleichbaren, metallischen Werkstoff bestehen, wie die Hüllen (Deckbleche 7, 8, Faltenbalg 9) der Vakuum-Wärmeisolationselemente (6), und mit letzteren vakuumdicht verschweißt sind, daß die Dehnungsbleche (Elemente 3, 4) mit wenigstens einer in Fugenlängsrichtung verlaufenden Dehnungsfalte (5) versehen sind, und daß die Dehnungsfalten (5) im Bereich von Fugenstößen, z.B. von T-Stößen oder Fugenkreuzungen, mit ausreichend großen Radien, d.h. ohne Kerbwirkung, ineinander übergehen.

4. Fugenisolation nach einem oder mehreren der Ansprüche 1 bis 3, dadurch gekennzeichnet, daß die Dehnungsbleche aus Elementen (3) für die Fugen und Elementen (4) für die Fugenstöße zusammengesetzt sind, und daß als schüttfähiges Isoliermaterial (11) für die Fugenhohlräume (10) Kieselgur, Perlite oder synthetisches Kieselsäuregranulat verwendet wird.

**Claims**

1. Joint insulation for vacuum heat insulation elements which have facing ends adjacent to one another with a gap inbetween and which have one flat side butting against a gas tight and pressure proof wall (2), in which respect the joints are covered on the side opposite the pressure proof wall (2) with elastically deformable expansion sheets, characterised in that the expansion sheets (elements 3,4) are applied vacuum tight to the vacuum heat insulation elements (6), that the joint hollow spaces (10) are evacuated and filled either only with pourable or fibrous, porous and pressure resistant insulating material (11), or partially with pourable or fibrous insulating material (11) and partially with heat insulating, mechanically loadable support bodies (12).

2. Joint insulation according to claim 1, wherein the vacuum heat insulation elements but against the inside of a gas tight container wall or container coating, characterised in that sealable evacuation apertures terminate, via the container wall or the container coating respectively, in the joint hollow spaces (10).

3. Joint insulation according to claim 1 or 2, characterised in that the expansion sheets (elements 3, 4) are composed of a metallic material comparable to that of the sleeves (cover sheets 7, 8) fold bellows 9) of the vacuum heat insulation elements (6), that they are welded together vacuum tight with the latter, that the expansion sheets (elements 3, 4) are provided with at least one expansion fold (5), extending in the longitudinal direction of the joint, and that the expansion folds (5) merge into one another in the area of the joint junctions, for example T-junctions or cross junctions, with sufficiently large radii, i.e. without notch effect.

4. Joint insulation according to one or several of the claims 1 to 3, characterised in that the expansion sheets are assembled from elements (3) for the joints and elements (4) for the joint junctions, and that silica gel, perlite or synthetic silicic acid granules are used as pourable insulating material (11) for the joint hollow spaces (10).

## Revendications

1. Isolation des interstices entre des éléments d'isolation thermique sous vide dont les côtés frontaux sont adjacents à distance les uns des autres et qui sont appliqués d'un côté à plat sur une paroi résistant à la pression et étanche aux gaz, les interstices étant recouverts de tôles de dilatation élastiquement déformables sur le côté éloigné de la paroi (2) résistant à la pression, caractérisée par le fait que les tôles de dilatation (éléments 3, 4) sont rapportées de façon étanche au vide sur les éléments d'isolation thermique sous vide (6) que les cavités (10) des interstices sont mises sous vide et sont remplies, soit uniquement avec un matériau isolant (11) fluide ou fibreux, poreux et résistant à la pression, soit partiellement avec un matériau isolant (11) fluide ou fibreux et partiellement avec des corps de support (12) thermiquement isolants et mécaniquement résistants.

2. Isolation suivant la revendication 1, les éléments d'isolation thermique sous vide étant appliqués contre le côté intérieur d'un paroi ou d'un revêtement d'un récipient étanche aux gaz, caractérisé par le fait que des ouvertures obturables de mise sous vide débouchent à travers la paroi du récipient ou à travers le revêtement du récipient dans les cavités (10) des interstices.

3. Isolation suivant la revendication 1 ou 2, caractérisée par le fait que les tôles de dilatation (éléments 3, 4) sont constituées par un matériau métallique comparable à celui des enveloppes (tôles de revêtement 7, 8, soufflets à plis 9) des éléments d'isolation thermique sous vide (6) et sont soudées de façon étanche vide à ces derniers, que les tôles de dilatation (éléments 3, 4) sont munies d'au moins un pli de dilatation (5) s'étendant dans la direction longitudinale des interstices, et que les plis de dilatation (5) se raccordent les uns les autres, dans la zone des joints, par exemple de joints en T ou de joints croisés, avec des rayons suffisamment importants pour qu'ils ne subissent pas d'effet d'entaille.

4. Isolation suivant une ou plusieurs des revendications 1 à 3, caractérisée par le fait que les tôles de dilatation sont composées d'éléments (3) pour les interstices et d'éléments (4) pour les joints des interstices, et que le matériau isolant fluide (11) pour les cavités des interstices (10) est constitué par du kieselgur, de la perlite ou un granulat d'acide silicique synthétique.

FIG. 1

FIG. 2